# EUROPÄISCHE PATENTANMELDUNG

(11) **EP 3 330 535 A1**
(43) Veröffentlichungstag der Anmeldung: **06.06.2018**
(21) Anmeldenummer: 16202002.8
(22) Anmeldetag: 02.12.2016
(51) Int. Cl.: F03D 13/20, E04H 12/10, E04H 12/14, F03D 13/25

(54) **TURM FÜR EINE WINDENERGIEANLAGE**

(71) Anmelder: Nordex Energy GmbH, 22419 Hamburg (DE)
(72) Erfinder: Günther, Christian, 22307 Hamburg (DE)
(74) Vertreter: Garrels, Sabine

(57) **Zusammenfassung**

Die Erfindung betrifft einen Turm (4) für eine Windenergieanlage (1) mit einem als Stabwerk ausgebildeten unteren Abschnitt (6) und einem als Stahlrohr ausgebildeten oberen Abschnitt (5), bei dem das Stabwerk aus geraden Stäben (61) als Hyperboloidkonstruktion ausgebildet ist.

## Beschreibung

Die Erfindung betrifft einen Turm für eine Windenergieanlage.

Moderne Windenergieanlagen werden zumeist auf Rohrtürmen, insbesondere Stahlrohrtürmen errichtet, da diese Bauform einfach und wirtschaftlich ist. Bei immer größer werdenden Windenergieanlagen mit zunehmender Leistung, größerem Rotordurchmesser und immer größer werdender Turmhöhe wird der erforderliche Durchmesser des Turms im unteren Turmbereich zu einer entscheidenden technischen Restriktion. Turmsektionen mit einem Durchmesser von mehr als 4,3 Metern sind unter anderem wegen der begrenzten Durchfahrtshöhe unter Brücken nur schwer transportierbar.

Weiterhin werden Betontürme eingesetzt, die entweder als Ortbetonbauwerk auf der Baustelle hergestellt werden oder aus Einzelteilen bestehen, die miteinander verbunden werden.

Beide Bauformen werden bei Beton-Stahlrohr-Hybridtürmen kombiniert, bei denen der untere Turmabschnitt als Betonturm hergestellt und der obere Turmabschnitt als Stahlrohrturm ausgeführt wird.

Als weitere Bauweise sind Fachwerk- oder Gittertürme seit langem bekannt. Neben den Vorteilen des effektiven Materialeinsatzes, des einfachen Transportes und geringer Beschaffungs- und Logistikkosten weisen diese Türme jedoch eigene Nachteile auf, beispielsweise Probleme mit dem erforderlichen Abstand zwischen den Rotorblättern und dem Turm (Blattfreigang), eine aufwendige Montage auf der Baustelle und die erforderliche regelmäßige Wartung der bei diesen Türmen eingesetzten Schraubverbindungen.

Fachwerk-Stahlrohr-Hybridtürme schließlich kombinieren einen Gitterturm als unteren Turmabschnitt mit einer oder mehreren Stahlrohrturmsektionen als oberen Turmabschnitt.

Aus der DE 10 2004 020 480 A1 ist ein Mast für Windkraftanlagen bekannt, der dadurch gekennzeichnet ist, dass er ein Unterteil nach Art eines Gittermastes aufweist und sein Oberteil von einem Rohrmantelmast gebildet ist, wobei das Oberteil mit dem Unterteil lösbar verbunden ist.

Aus der WO 2005/021897 A1 ist ein weiterer Turm für eine Windenergieanlage bekannt, mit einem oberen, rohrförmig ausgebildeten Turmabschnitt, der in einem Übergangsbereich mit einem unteren, als Gitterturm ausgebildeten Turmabschnitt verbunden ist, wobei der Gitterturm mindestens drei Eckstiele aufweist.

Aus der US 3,922,827 A und der WO 2012/127467 A1 sind hyperboloidförmige Turmstrukturen bekannt.

Hyperboloidförmige Strukturen finden sonst vor allem im Kraftwerksbau bei Kühltürmen Einsatz.

### Darstellung der Erfindung

Es ist die Aufgabe der Erfindung, einen Turm für eine Windenergieanlage bereitzustellen, der einen großen Durchmesser am Turmfuß aufweist und zugleich materialsparend und kostengünstig ist.

Die Aufgabe wird gelöst durch einen Turm in einer hybriden Bauweise bestehend aus einem oberen Turmteil, der aus einem konventionellen Stahlrohrturm besteht, und einem unteren Turmteil, der als Stabwerk ausgebildet ist. Das Stabwerk besteht aus geraden Stäben oder Profilen, die als Hyperboloidkonstruktion angeordnet sind. Die Stäbe des Stabwerks sind dabei auf einem Kreis angeordnet und derart gegeneinander geneigt, dass sie einander in einer Vielzahl von Kreuzungspunkten überkreuzen, wobei sich die äußere geometrische Form als einschaliges Rotationshyberboloid darstellt.

In einer Ausführungsform ist das Stabwerk als Hyperboloidkonstruktion in Form eines einschaligen Rotationshyperboloids ausgebildet.

Alternativ ist das Stabwerk als Hyperboloidkonstruktion in Form von zwei oder mehr, übereinander angeordneten einschaligen Rotationshyperboloiden ausgebildet.

Das Stabwerk ist für eine bevorzugte Ausführungsform in den Kreuzungspunkten oder neben den Kreuzungspunkten der Stäbe mit aussteifenden Ringen versehen.

Bevorzugt werden als Material für das Stabwerk metallische Materialien, insbesondere Stahl oder Aluminium, Faserverbundkunststoffe, insbesondere GFK oder CFK, Betone, insbesondere vorgespannte "Ultra-High-Performance-Concrete- (UHPC-)" Profile, Holz oder eine Kombination dieser Materialien verwendet.

Für eine weitere Ausführungsform ist eine äußere Verkleidung aus einer Membran vorgesehen, welche am oberen Ende eines Abschnittes des Stabwerks und an dessen unterem Ende befestigt ist, wobei vom unteren Ende aus eine Vorspannung der Membran erfolgen kann. Die Membran besteht aus einem Kunststoff, einem faserverstärkten Kunststoff, einem textilen Material oder anderen geeigneten Materialien.

Die Herstellung der Sektionen kann auf der Baustelle erfolgen: separat auf einem Vorfertigungsplatz oder direkt auf dem Fundament der Windenergieanlage. Eine geeignete Geometrie der hyperboloidförmigen Abschnitte vorausgesetzt, kann eine Teleskopbauweise genutzt werden, bei der jeweils der kleinere Stabwerksabschnitt innerhalb des größeren im Fuß des Turms hergestellt wird; nach Fertigstellung werden die Abschnitte innerhalb des Turmfußes mit einfachem Hebezeug nach oben errichtet und mit dem vorherigen Stabwerksabschnitt mittels einer vorgespannten Schraubverbindung verbunden.

Der Turm weist folgende Vorteile auf:
- Geringes Gewicht gegenüber konventionellen Lösungen;
- Kostenreduktion bei Errichtung durch den Einsatz einfacherer Hebezeuge;
- Realisierung großer Turmfußdurchmesser;
- Erhöhung der Eigenfrequenzen vor allem bei hohen Turmhöhen;
- Für Offshore-Gründungen einfachere alternative zu einer fertigungsaufwendigen "Jacket"-Gründung;
- Reduzierte Logistikkosten durch Lieferung einfacher Standardprofile auf die Baustelle und Fertigung des Stabwerks vor Ort.

Die als Membran ausgebildete Verkleidung weist folgende Vorteile auf:
- Geringes Gewicht gegenüber konventionellen Verkleidungen;
- Kostenreduktion bei Errichtung durch den Einsatz einfacherer Hebezeuge;
- Einfache Realisierung der Verkleidung bei großen Turmfußdurchmessern;
- Pro Turmabschnittschuss nur ein Arbeitsvorgang zur Verkleidung der Struktur;
- Steigerung der Ästhetik und Einfügung ins Landschaftsbild.

### Ausführung der Erfindung

Die Erfindung wird nachfolgend anhand eines Ausführungsbeispiels näher erläutert.

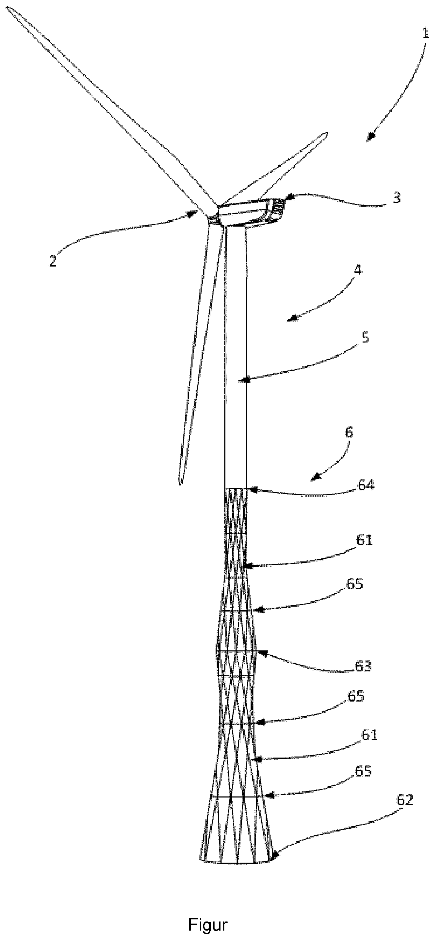

Die Figur zeigt eine Windenergieanlage 1, die einen Rotor 2 mit drei Rotorblättern, eine Gondel 3 und einen erfindungsgemäßen Turm 4 aufweist. Der Rotor 2 wandelt die Bewegungsenergie des Windes in eine Rotation um. In der Gondel 3 sind die zur Umformung und Umwandlung der mechanischen Energie der Rotation des Rotors in elektrische Energie notwendigen Einrichtungen untergebracht, insbesondere eine Rotorlagerung und ein Generator sowie ein eventuell notwendiges Getriebe.

Der Turm 4 weist einen oberen Abschnitt 5 auf, der in bekannter Weise als Stahlrohr ausgebildet ist. Der obere Abschnitt 5 kann aus rohrförmigen Unterabschnitten bestehen, Stahlrohrturmsektionen, die jeweils zylindrisch und/oder konisch ausgebildet und miteinander verbunden sind.

Der Turm 4 weist weiterhin einen unteren Abschnitt 6 auf, der erfindungsgemäß als Stabwerk aus geraden Stäben 61 ausgebildet ist. Die Stäbe 61 sind auf einem Kreis angeordnet und derart gegeneinander geneigt, dass sie einander in einer Vielzahl von Kreuzungspunkten überkreuzen, wobei sich die äußere geometrische Form als einschaliges Rotationshyberboloid darstellt. Bei dem dargestellten Turm sind zwei übereinander angeordnete einschalige Rotationshyperboloide erkennbar; selbstverständlich kann der untere Abschnitt 6 auch die Form nur eines Hyperboloids oder von drei oder mehr Hyperboloiden aufweisen.

Hierbei sind die von Gittermasten nach dem Stand der Technik bekannten Eckstützen nicht vorhanden, die dort die in senkrechter Richtung wirkenden Kräfte aufnehmen. Vielmehr werden alle Kräfte von den Stäben 61 aufgenommen.

Die Stäbe 61 stützen sich auf einen unteren horizontalen Ring, den Fußring 62 ab, der zugleich die Schnittstelle zum nicht dargestellten Fundament der Windenergieanlage bildet. Den oberen Abschluss des Stabwerks bildet ein oberer horizontaler Ring, der Kopfring 64, der zugleich die Schnittstelle zum rohrförmigen oberen Abschnitt 5 des Turms bildet. Die Verbindung zwischen dem Kopfring 64 und dem stahlrohrförmigen oberen Abschnitt 5 kann in konventioneller Weise mittels vorgespannter Schraubverbindungen mit einem T- oder L-förmigen Flansch am unteren Ende des Stahlrohrs erfolgen.

Zwischen den einzelnen Hyperboloid-Abschnitten ist ein Mittelring 63 angeordnet, der von den Stäben 61 des unteren hyperboloidförmigen Abschnittes getragen wird und auf den sich die Stäbe 61 des darüber befindlichen oberen hyperboloidförmigen Abschnittes abstützen. Der Mittelring 63 bildet so den Kopfring des unteren und den Fußring des oberen hyperboloidförmigen Abschnittes.

Die Stäbe 61 sind gleichmäßig paarweise auf dem Fussring 62 verteilt, Die Neigungswinkel der Stäbe 61 im unteren hyperboloidförmigen Abschnitt sind derart gewählt, dass diese gleichmäßig paarweise den Mittelring 63 tragen. Ebenso sind im oberen hyperboloidförmigen Abschnitt die Stäbe 61 gleichmäßig paarweise auf dem Mittelring 63 verteilt und derart geneigt, dass sie gleichmäßig paarweise den Kopfring 64 tragen. Das heißt, dass jeweils zwei Stäbe 61 in ihrem unteren Endpunkt und zwei Stäbe 61 in ihrem oberen Endpunkt zusammentreffen.

Zur Aussteifung des Stabwerks sind Versteifungsringe 65 vorhanden. Diese können vorzugsweise an Kreuzungspunkten der Stäbe 61 angeordnet sein, wie die Figur zeigt, oder sie befinden sich außerhalb der Kreuzungspunkte.

Wichtige Parameter für die geometrische Form und die mögliche Lastaufnahme des Turms sind die Radien des Fußringes 62, des Mittelringes 63 und des Kopfringes 64, die Höhen der hyperboloidförmigen Abschnitte, die Zahl der Stäbe 61, die Neigungswinkel der Stäbe 61 und die Anzahl der Versteifungsringe 65.

Die Stäbe 61 und die Ringe 62, 63, 64, 65 können aus metallischen Materialien, insbesondere Stahl oder Aluminium, aus Faserverbundkunststoffen, insbesondere CFK oder GFK, aus Beton, insbesondere einem vorgespannten hochfesten Beton (Ultra-High Performance Concrete, UHPC). oder einer Kombination davon bestehen.

Die Herstellung der Stabwerke kann auf der Baustelle erfolgen, wahlweise direkt auf dem Fundament der Anlage oder auf einem Vorfertigungsplatz. Von dem Vorfertigungsplatz kann das Stabwerk durch einen Kran auf das Fundamet gehoben und mit Hilfe von bekannten Verbindungsmitteln darauf befestigt werden; vorteilhaft wird zunächst der untere Stabwerksabschnitt auf diese Weise errichtet und danach der obere Stabwerksabschnitt auf den unteren gesetzt und darauf befestigt. Der weitere Aufbau des Stahlrohrabschnittes und der Gondel und des Rotors der Windenergieanlage erfolgen in bekannter Weise.

Das Stabwerk kann offen bleiben oder verkleidet sein, wobei eine Verkleidung aus einer Kunststoff- oder Textilplane eingesetzt werden kann. Die Verkleidung schützt das Stabwerk und den Innenraum gegen Witterungseinflüsse. Da aufgrund der geometrischen Form des Stabwerks eine Plane leicht in zwei Richtungen gespannt werden kann, besteht kaum eine Gefahr, daß die Plane flattert und im Wind zerreißt. Alternativ kann eine Verkleidung aus vorgefertigten Paneelen eingesetzt werden.

Das Ergebnis ist ein Turm mit einem geringen Gewicht im Vergleich zu konventionellen Türmen, der einen besonders bei großen Nabenhöhen vorteilhaften großen Durchmesser am Turmfuß aufweist, was sich erhöhend auf die Eigenfrequenz des Turmes auswirkt, aus einfachen, leicht herstell- und transportierbaren und kostengünstigen Profilen aufgebaut und zudem ästhetisch attraktiv ist.

### Bezugszeichenliste

- 1: Windenergieanlage
- 2: Rotor
- 3: Gondel
- 4: Turm
- 5: Stahlrohrturmabschnitt
- 6: Stabwerksabschnitt
- 61: Stab
- 62: Fußring
- 63: Mittelring
- 64: Kopfring
- 65: Versteifungsring

## Patentansprüche

1. Turm (4) für eine Windenergieanlage (1) mit einem als Stabwerk ausgebildeten unteren Abschnitt (6) und einem als Stahlrohr ausgebildeten oberen Abschnitt (5), **dadurch gekennzeichnet, dass**
das Stabwerk aus geraden Stäben (61) als Hyperboloidkonstruktion ausgebildet ist.

2. Turm nach Anspruch 1, **dadurch gekennzeichnet, dass**
das Stabwerk als Hyperboloidkonstruktion in Form eines einschaligen Rotationshyperboloids ausgebildet ist.

3. Turm nach Anspruch 1, **dadurch gekennzeichnet, dass**
das Stabwerk als Hyperboloidkonstruktion in Form von zwei oder mehr, übereinander angeordneten einschaligen Rotationshyperboloiden ausgebildet ist.

4. Turm nach einem der Ansprüche 1 bis 3, **dadurch gekennzeichnet, dass**
das Stabwerk in den Kreuzungspunkten oder neben den Kreuzungspunkten der Stäbe (61) mit aussteifenden Ringen (65) versehen ist.

5. Turm nach einem der Ansprüche 1 bis 4, **dadurch gekennzeichnet, dass**
das Stabwerk aus metallischen Materialien, Faserverbundkunststoffen, Beton oder einer Kombination dieser Materialien besteht.

6. Turm nach einem der Ansprüche 1 bis 5, **dadurch gekennzeichnet, dass**
das Stabwerk mit einer äußeren Verkleidung versehen ist.

7. Turm nach Anspruch 6, **dadurch gekennzeichnet, dass**
die äußere Verkleidung aus einer Membran besteht, welche am oberen Ende eines Abschnittes des Stabwerks und an dessen unterem Ende befestigt ist, wobei vom unteren Ende aus eine Vorspannung der Membran erfolgt.

8. Turm nach Anspruch 7, **dadurch gekennzeichnet, dass**
die Membran aus einem Kunststoff, einem faserverstärkten Kunststoff, einem textilen Material oder einer Kombination dieser Materialien besteht.

9. Windenergieanlage (1) mit einem Rotor (2), einer Gondel (3) und einem Turm (4) nach einem der vorhergehenden Ansprüche.
